(19) Europäisches Patentamt
European Patent Office
Office européen des brevets

(11) **EP 0 959 115 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(51) Int Cl.⁷: **C09D 175/04**, C08G 18/78, C08G 18/70

(21) Anmeldenummer: **99109120.8**

(22) Anmeldetag: **08.05.1999**

(54) **Wässrige 2K PUR-Beschichtungssysteme**

Aqueous two-component PUR coating systems

Compositions aqueuses de revêtement à base de PUR à deux composants

(84) Benannte Vertragsstaaten:
**AT BE CH DE ES FR GB IT LI NL SE**

(30) Priorität: **22.05.1998 DE 19822890**

(43) Veröffentlichungstag der Anmeldung:
**24.11.1999 Patentblatt 1999/47**

(73) Patentinhaber: **Bayer Aktiengesellschaft**
**51368 Leverkusen (DE)**

(72) Erfinder:
- **Wamprecht, Christian Dr.**
  **41472 Neuss (DE)**
- **Laas, Hans-Josef Dr.**
  **50733 Köln (DE)**

(56) Entgegenhaltungen:
EP-A- 0 802 210          EP-A- 0 835 889
US-A- 5 563 207

**Beschreibung**

Die Erfindung betrifft neue wäßrige Zweikomponenten-Beschichtungsmittel auf Basis von hydroxy- und/oder aminofunktionellen wasserverdünnbaren Harzen und neuen wasserdispergierbaren isocyanatfunktionellen Härtern, ein Verfahren zu deren Herstellung und deren Verwendung in Lacken, Beschichtungen und Dichtmassen.

Zweikomponenten-Polyurethanlacke haben aufgrund ihrer hervorragenden Eigenschaften eine große Bedeutung auf dem Beschichtungssektor erlangt. Von Nachteil ist, daß bei ihrer Verarbeitung in den meisten Fällen größere Mengen organischer Lösemittel erforderlich sind. In nahezu allen Anwendungsbereichen werden jedoch verstärkt festkörperreiche oder vor allem auch wasserverdünnbare Beschichtungsmittel gefordert, um die Lösemittelemissionen so weit wie möglich zu reduzieren bzw. zu vermeiden.

Die Verwendung von Wasser als Lösungsmittel für Zweikomponenten-Polyurethanläcke schien bis vor einigen Jahren nicht ohne weiteres möglich, weil Isocyanatgruppen nicht nur mit den Hydroxylgruppen des Harzes zu Urethanen sondern auch mit Wasser unter Harnstoff- und Kohlendioxidbildung abreagieren können. Hierdurch werden in der Regel die Verarbeitungszeit, die Applikationssicherheit, die Erzielung ausreichender blasenfreier Schichtstärken erschwert und die Beständigkeitseigenschaften der Lacke und Beschichtungen auf nicht mehr praxisgerechte Werte verschlechtert.

Erst in den letzten Jahren wurden jedoch verstärkt Anstrengungen unternommen, um diese Probleme zu reduzieren. So wird z.B. in der EP-A 358 979 beschrieben, daß ausgewählte Polyhydroxypolyacrylat-Sekundärdispersionen mit Polyisocyanaten, die freie Isocyanatgruppen aufweisen, zu wäßrigen Zweikomponentensystemen kombiniert werden können.

Dieses Prinzip konnte auch auf andere hydroxyfunktionelle Harzdispersionen übertragen werden, wodurch die Eigenschaften der Lacke nun variiert werden können. Zum Beispiel beschreibt die EP-A 557 844 Zweikomponenten-Polyurethanbeschichtungen auf Basis von hydroxyfunktionellen Primärdispersionen, die EP-A 543 228 solche auf Basis von Polyester-Polyacrylat-Hybriddispersionen, die EP-A 741 176 solche auf Basis fremdemulgierter Alkydharze, die EP-A 496 205 solche auf Basis von urethanmodifizierten Polyesterdispersionen oder die EP-A 542 105 solche auf Basis von Mischungen verschiedener Harztypen.

Als Polyisocyanatkomponente können in den wäßrigen Zweikomponenten-Polyurethansystemen sowohl hydrophobe als auch hydrophile, selbstemulgierende Polyisocyanate verwendet werden. Besonders geeignete Vernetzer sind durch Umsetzung mit Polyetheralkoholen hydrophil modifizierte Polyisocyanate, wie sie z.B. in EP-A 206 059, in EP-A 540 985 oder US-P 5 200 489 beispielhaft beschrieben sind. Solche Polyetherurethane enthaltende Polyisocyanatgemische lassen sich sehr leicht, z.B. durch einfaches Einrühren von Hand, in die wäßrige Harzdispersion einemulgieren, was besonders für die Anwendungsbereiche Autoreparatur- und Großfahrzeuglackierung von wesentlicher Bedeutung ist. Durch die vereinfachte Einarbeitung des Härters wird eine homogenere Durchmischung der Komponenten erreicht und damit die Applikationssicherheit und das optische Eigenschaftsniveau, insbesondere der Glanz der Beschichtungen, deutlich erhöht.

Gleichzeitig werden jedoch bei Verwendung dieser polyethermodifizierten Polyisocyanate aufgrund der zusätzlichen in das System eingebrachten hydrophilen Gruppen und der durch die Hydrophilierungsreaktion herabgesetzten NCO-Funktionalität des Vernetzers andere wesentliche Lackeigenschaften, insbesondere die Lösemittel- und Wasserfestigkeit verschlechtert. Darüber hinaus ist die Verträglichkeit gewisser Dispersionen, z.B. Primärdispersionen (Emulsionscopolymerisate), auch mit den bekannten hydrophilierten Polyisocyanaten oft noch nicht ausreichend, so daß häufig trübe Klarlackfilme erhalten werden. Außerdem sind die Probleme einer begrenzten Topfzeit und des Auftretens von Reaktionsbläschen bei hohen Schichtstärken bisher nicht befriedigend gelöst.

Die Aufgabe der Erfindung bestand nun darin, neue wäßrige Zweikomponenten-Polyurethanbeschichtungen mit verbesserter Lösemittel- und Wasserfestigkeit bei hohem Glanz, reduziertem Glanzschleier, verlängerter Topfzeit, hoher Applikationssicherheit und ausreichender blasenfreier Schichtstärke zur Verfügung zu stellen. Diese neuen Beschichtungssysteme sollten insbesondere für die Anwendung in den Bereichen Autoreparatur- und Großfahrzeuglackierung sowohl als Grundierungsfüller, als Füller, als Decklack und als Klarlack geeignet sein.

Diese Aufgabe konnte überraschenderweise mit der Bereitstellung der erfindungsgemäßen Beschichtungsmittel auf Basis von hydroxy- und/oder aminofunktionellen wasserverdünnbaren Harzen und neuen wasserdispergierbaren isocyanatfunktionellen Härtern bzw. des Verfahrens zur Herstellung dieser Beschichtungsmittel gelöst werden.

Die Erfindung basiert auf der überraschenden Beobachtung, daß sich durch Umsetzung monomerenarmer Polyisocyanate mit monofunktionellen Polyethylenoxidpolyetheralkoholen unter Allophanatisierungsbedingungen neue wasserdispergierbare Polyisocyanatgemische hoher Isocyanatfünktionalhät herstellen lassen, die sich bereits bei deutlich niedrigeren Polyethergehalten erheblich leichter und feinteiliger in wäßrige Systeme einrühren lassen als unter Verwendung baugleicher Polyetheralkohole hergestellte wasserdispergierbare Polyisocyanate des Standes der Technik, bei denen die Polyetherketten über Urethanbindungen mit dem Polyisocyanat verknüpft sind. Aufgrund ihrer hervorragenden Wasseremulgierbarkeit bei niedrigeren Polyethergehalten, in Verbindung mit der hohen Isocyanatfunktionalität führt die Verwendung dieser neuen Polyisocyanatgemische als Härterkomponente in wäßrigen Polyurethanlacken zu Beschichtungen mit hervorragenden optischen Eigenschaften, insbesondere hohem Oberflächenglanz, Verlauf und hoher Transparenz und gleichzeitig deutlich verbesserter Lösemittel- und Wasserfestigkeit.

Gegenstand der vorliegenden Erfindung sind Beschichtungsmittel aus

A) 30 bis 99 Gew.-% einer wäßrigen, hydroxy- und/oder aminofunktionellen Harzdispersion,

B) 1 bis 70 Gew.-% einer wasserdispergierbaren Härterkomponente und

C) 0 bis 60 Gew.-% weiteren, in der Lacktechnologie bekannten Hilfs- und Zusatzmittel,

dadurch gekennzeichnet, daß es sich bei der Komponente B) um ein wasserdispergierbares Polyisocyanatgemisch auf Basis aliphatischer, cycloaliphatischer, araliphatischer und/oder aromatischer Diisocyanate handelt, das

a) eine mittlere Isocyanatfunktionalität von mindestens 2,0,

b) einen Gehalt an Isocyanatgruppen (berechnet als NCO; Molekulargewicht = 42) von 5,0 bis 25,0 Gew.-% und

c) einen Gehalt an innerhalb von Polyetherketten gebundenen Ethylenoxideinheiten (berechnet als $C_2H_4O$; Molekulargewicht = 44) von 2 bis 50 Gew.-% aufweist, wobei die Polyetherketten im statistischen Mittel 5 bis 35 Ethylenoxideinheiten enthalten und zu mindestens 60 mol-% über Allophanatgruppen mit jeweils zwei, jeweils aus mindestens zwei Diisocyanaten aufgebauten Polyisocyanatmolekülen verknüpft sind.

Gegenstand der Erfindung ist auch ein Verfahren zur Herstellung dieser Beschichtungsmittel und deren Verwendung in Lacken, Beschichtungen, Grundierungen und Dichtmassen, insbesondere in den Bereichen Autoreparatur- und Großfahrzeuglackierung.

Als Komponente A) können in den erfindungsgemäßen Beschichtungsmitteln sämtliche in der wäßrigen Zweikomponenten-Polyurethanbeschichtungstechnologie üblichen Harzdispersionen eingesetzt werden. Derartige Harzdispersionen und die Verfahren zur ihrer Herstellung sind bekannt. Es handelt sich beispielsweise um die üblichen wäßrigen oder in Wasser dispergierbaren Polyesterharze, Polyacrylatharze, Polyurethanharze, Polyharnstoffharze, Polycarbonatharze oder Polyetherharze, wie sie beispielsweise in den EP-A 358 979, EP-A 469 389, EP-A 496 205, EP-A 557 844, EP-A 583 728, WO 94/03511, WO 94/20559, WO 94/28043 und WO 95/02005 beschrieben sind. Auch der Einsatz von beliebigen Hybriddispersionen oder beliebigen Mischungen verschiedener Dispersionen ist möglich.

Von besonderem Interesse bezüglich des Anforderungsniveaus in den Bereichen Autoreparatur- und Großfahrzeuglackierung sind Harzdispersionen auf Polymerisatbasis. Bevorzugt kommen daher in den erfindungsgemäßen Beschichtungsmitteln als Komponente A) Harzdispersionen auf Polyacrylatbasis zum Einsatz. Dabei kann es sich einerseits um sogenannte Sekundärdispersionen handeln, bei denen die Harzherstellung zunächst in einem organischen Medium, in der Regel einem Lösemittel, erfolgt und das Harz nach Neutralisation in einem zweiten Schritt in Wasser dispergiert wird. Das zur Herstellung verwendete Lösemittel kann im Anschluß an die Dispergierung entweder destillativ entfernt werden oder aber als Colösemittel in der Dispersion verbleiben. Andererseits können als Harzdispersionen auch sogenannte Primärdispersionen dienen. Darunter versteht man in der Regel Emulsionscopolymerisate, die unter Zuhilfenahme von Emulgatoren direkt in Wasser hergestellt werden.

Die in den erfindungsgemäßen Beschichtungsmitteln eingesetzten Harzdispersionen A) können sowohl durch Verwendung (Zusatz) von externen Emulgatoren als auch mit Hilfe von internen Emulgatorfunktionen hergestellt werden. Unter internen Emulgatoren versteht man dabei chemisch in die Harze eingebaute ionische Gruppierungen, wie z.B. Carboxylat- oder Sulfonatgruppen, wobei die entsprechenden Gegenionen z.B. Alkali-, Erdalkali- oder Ammoniumionen bzw. quartäre Stickstoffatome sind.

Neben den zur Dispergierung vorhandenen Carboxylat- oder Sulfonatgruppen sind die in den erfindungsgemäßen Beschichtungsmitteln eingesetzten Harzdispersionen A) in der Regel hydroxy- oder aminofunktionell. In Ausnahmefällen ist es darüberhinaus auch möglich, nichtfunktionelle Dispersionen, die nur Carboxylat- oder Sulfonatgruppen enthalten, als Bindemittelkomponente A) einzusetzen.

Bevorzugt kommen hydroxyfunktionelle Harzdispersionen zum Einsatz, die bezogen auf Festharz einen Gehalt an Hydroxylgruppen von 0,5 bis 7,0 Gew.-%, vorzugsweise von 0,5 bis 6,0 Gew.-%, besonders bevorzugt von 1,0 bis 5,0 Gew.-%, und Säurezahlen von weniger als 60 mg KOH/g, vorzugsweise weniger als 50 mg KOH/g, besonders bevorzugt weniger als 30 mg KOH/g, aufweisen.

Bei der Härterkomponente B) handelt es sich um monomerenarme wasserdispergierbare Polyisocyanatgemische einer mittleren Isocyanatfunktionalität von mindestens 2,0, mit einem Gehalt an aliphatisch, cycloaliphatisch, araliphatisch und/oder aromatisch gebundenen Isocyanatgruppen (berechnet als NCO; Molekulargewicht = 42) von 5,0 bis 25,0 Gew.-% und einem Gehalt an innerhalb von Polyetherketten gebundenen Ethylenoxideinheiten (berechnet

als $C_2H_4O$; Molekulargewicht = 44) von 2 bis 50 Gew.-%, wobei die Polyetherketten im statistischen Mittel 5 bis 35 Ethylenoxideinheiten enthalten und zu mindestens 60 mol-% über Allophanatgruppen mit jeweils zwei, jeweils aus mindestens zwei Diisocyanaten aufgebauten Polyisocyanatmolekülen verknüpft sind.

Ausgangspolyisocyanate zur Herstellung der Härterkomponente B) sind beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate, insbesondere die als Lackpolyisocyanate bekannten Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, den DE-A 1 670 666, 1 954 093, 2 414 413, 2 452 532, 2 641 380, 3 700 209, 3 900 053 und 3 928 503 oder den EP-A'en 336 205, 339 396 und 798 299 beispielhaft beschrieben sind.

Geeignete Diisocyanate zur Herstellung solcher Polyisocyanate sind bevorzugt solche des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1,10-Diisocyanatodecan, 1,3-und 1,4-Diisocyanatocyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, 1,3- und 1,4-Bis-(2-isocyanato-prop-2-yl)-benzol, 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Bevorzugte Ausgangspolyisocyanate zur Herstellung der Härterkomponente B) sind Polyisocyanate oder Polyisocyanatgemische der genannten Art mit ausschließlich aliphatisch und/oder cycloaliphatisch gebundenen Isocyanatgruppen. Ganz besonders bevorzugt sind Polyisocyanate bzw. Polyisocyanatgemische mit Isocyanuratstruktur auf Basis von HDI, IPDI und/oder 4,4'-Diisocyanatodicyclohexylmethan.

Weitere Ausgangsverbindungen zur Herstellung der Härterkomponente B) sind einwertige, im statistischen Mittel 5 bis 35, vorzugsweise 7 bis 30 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z.B. Ullmanns Encyclopädie der technischen Chemie, 4. Auflage, Band 19, Verlag Chemie, Weinheim S. 31- 38).

Als geeignete Startermoleküle für die zur Herstellung der Härterkomponenten B) eingesetzten Polyetheralkohole seien hier beispielhaft genannt: gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan, oder Tetrahydrofurfurylalkohol; ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol. Anisalkohol oder Zimtalkohol; sekundäre Monoamine wie Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin oder Dicyclohexylamin sowie heterocylische sekundäre Amine wie Morpholin, Pyrrolidin, Piperidin oder 1H-Pyrazol.

Bevorzugte Startermoleküle sind gesättigte Monoalkohole mit bis zu 4 Kohlenstoffatomen. Besonders bevorzugt wird Methanol als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den zur Herstellung der Härterkomponente B) eingesetzten Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, vorzugsweise zu mindestens 40 mol-% aus Ethylenoxideinheiten bestehen.

Bevorzugte Polyalkylenoxidpolyetheralkohole zur Herstellung der Härterkomponente B) sind reine Polyethylenglycolmonomethyletheralkohole, die im statistischen Mittel 7 bis 30, ganz besonders bevorzugt 7 bis 25 Ethylenoxideinheiten aufweisen.

Zur Herstellung der Härterkomponente B) werden die Ausgangspolyisocyanate und die Polyalkylenoxidpolyetheralkohole bei Temperaturen von 40 bis 180°C, vorzugsweise 50 bis 150°C, unter Einhaltung eines NCO-/OH-Äquivalent-Verhältnisses von 6:1 bis 400:1, vorzugsweise von 8:1 bis 140:1, so miteinander umgesetzt, daß mindestens 60 mol-%, vorzugsweise mindestens 80 mol-%, besonders bevorzugt mindestens 90 mol-% der durch NCO/OH-Reaktion primär gebildeten Urethangruppen zu Allophanatgruppen weiterreagieren.

Zur Beschleunigung der Allophanatisierungsreaktion können gegebenenfalls geeignete Katalysatoren mitverwendet werden. Hierbei handelt es sich um die üblichen bekannten Allophanatisierungskatalysatoren, beispielsweise um Metallcarboxylate, Metallchelate oder tertiäre Amine der in der GB-A 994 890 beschriebenen Art, um Alkylierungsmittel der in der US-A 3 769 318 beschriebenen Art oder um starke Säuren, wie sie in der EP-A 000 194 beispielhaft beschrieben sind.

Geeignete Allophanatisierungskatalysatoren sind insbesondere Zinkverbindungen, wie Zinkstearat, Zink-n-octanoat, Zinkethylhexanoat, Zinknaphthenat oder Zinkacetylacetonat. Zinnverbindungen, wie Zinn-(II)-n-octanoat, Zinn-(II)-ethylhexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminiumtri(ethylacetoacetat), Eisen-(III)-chlorid, Kaliumoctoat, Mangan-, Cobalt- oder Nickelverbindungen sowie starke Säuren, wie Trifluoressigsäure, Schwefelsäure, Chlorwasserstoff, Bromwasserstoff, Phosphorsäure, Perchlorsäure oder beliebige Gemische dieser Katalysatoren.

Ferner können als Allophanatisierungskatalysatoren auch solche Verbindungen, die neben der Allophanatisierungsreaktion auch die Trimerisierung von Isocyanatgruppen unter Bildung von Isocyanuratstrukturen katalysieren, eingesetzt werden. Solche Katalysatoren sind beispielsweise in der EP-A 649 866 Seite 4, Zeile7 bis Seite 5, Zeile 15 beschrieben.

Die Allophanatisierungskatalysatoren kommen bei der Herstellung der Härterkomponente B), falls überhaupt, in einer Menge von 0,001 bis 5 Gew.-%, vorzugsweise 0,005 bis 1 Gew.-%, bezogen auf das Gesamtgewicht der Reaktionspartner zum Einsatz. Die Zugabe zum Reaktionsgemisch kann dabei nach beliebigen Methoden erfolgen. So ist es beispielsweise möglich, den gegebenenfalls mitzuverwendenden Katalysator entweder der Polyisocyanatkomponente und/oder der Polyetherkomponente vor Beginn der eigentlichen Umsetzung zuzumischen. Ebenso ist es möglich, den Katalysator dem Reaktionsgemisch zu einem beliebigen Zeitpunkt während der Urethanisierungsreaktion oder im Sinne einer zweistufigen Reaktionsführung auch im Anschluß an die Urethanisierung, d.h. wenn der einem vollständigen Umsatz von Isocyanat- und Hydroxylgruppen theoretisch entsprechende NCO-Gehalt erreicht ist, zuzusetzen.

Der Verlauf der Umsetzung kann durch z.B. titrimetrische Bestimmung des NCO-Gehaltes verfolgt werden. Nach Erreichen des angestrebten NCO-Gehaltes, vorzugsweise wenn das molare Verhältnis von Allophanatgruppen zu Urethangruppen im Reaktionsgemisch mindestens 4 : 1, besonders bevorzugt mindestens 9 : 1, beträgt, wird die Reaktion abgebrochen. Dies kann insbesondere bei rein thermischer Reaktionsführung beispielsweise durch Abkühlen des Reaktionsgemisches auf Raumtemperatur erfolgen. Bei der bevorzugten Mitverwendung eines Allophanatisierungskatalysators der genannten Art wird die Umsetzung im allgemeinen aber durch Zugabe geeigneter Katalysatorgifte, beispielsweise Säurechloride wie Benzoylchlorid oder Isophthaloyldichlorid, abgestoppt.

Im übrigen werden Art und Mengenverhältnisse der Ausgangskomponenten zur Herstellung der Härterkomponente B) im Rahmen der gemachten Angaben so gewählt, daß die resultierenden Polyisocyanatgemische den oben unter a) bis c) gemachten Angaben entsprechen, wobei a) die mittlere NCO-Funktionalität vorzugsweise 2,3 bis 9,9, besonders bevorzugt 2,8 bis 5,8, b) der NCO-Gehalt vorzugsweise 6,0 bis 22,5 Gew.-%, besonders bevorzugt 8,5 bis 21,5 Gew.-% und c) der Gehalt an innerhalb von Polyetherketten gebundenen Ethylenoxideinheiten vorzugsweise 5 bis 40 Gew.-%, besonders bevorzugt 7 bis 25 Gew.-% beträgt.

Die Angaben bezüglich der NCO-Funktionalität der Härterkomponenten B) beziehen sich auf den Wert, der sich rechnerisch aus Art und Funktionalität der Ausgangskomponenten der Härterkomponente B) nach der Formel

$$ F = \frac{\sum \text{val NCO} - \sum (1 + x) \cdot \text{mol OH}}{\sum \left( \frac{\text{val NCO}}{f_{NCO}} \right) + \sum \text{mol OH} - \sum f_{PET} \cdot \text{mol OH}} $$

bestimmen läßt, in welcher x den Anteil der zu Allophanatgruppen umgesetzten Urethangruppen bedeutet.

Die Funktionalität $f_{NCO}$ der Ausgangspolyisocyanate läßt sich aus dem NCO-Gehalt und dem beispielsweise durch Gelpermeationschromatographie (GPC) oder Dampfdruckosmose bestimmten Molekulargewicht errechnen.

Die Herstellung der Härterkomponenten B) kann gegebenenfalls in einem geeigneten, gegenüber Isocyanatgruppen inerten Lösemittel durchgeführt werden. Geeignete Lösemittel sind die an sich bekannten üblichen Lacklösemittel, wie z.B. Ethylacetat, Butylacetat, Ethylenglykolmonomethyl- oder -ethyletheracetat, 1 -Methoxypropyl-2-acetat, Aceton, 2-Butanon, Methylisobutylketon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha®, Solvesso®, Shellsol®, Isopar®, Nappar® und Diasol® im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Die Härterkomponenten B) stellen klare, praktisch farblose Polyisocyanatgemische der bereits oben genannten Zusammensetzung dar, die sich leicht, ohne Einsatz hoher Scherkräfte durch bloßes Einrühren in Wasser dispergieren lassen, wobei zum Erhalten sedimentationsstabiler wäßriger Dispersionen bei einer vorgegebenen Zusammensetzung und Molekulargewichtsverteilung der Polyethersegmente bereits ein erheblich niedrigerer Gesamtgehalt an Ethylenoxideinheiten ausreicht, als im Falle von wasserdispergierbaren Polyisocyanatgemischen des Standes der Technik, die durch Urethanisierung mit Polyetheralkoholen der gleichen Zusammensetzung und Molekulargewichtsverteilung hergestellt wurden. Gegenüber den bisher bekannten, Polyetherurethane enthaltenden Polyisocyanatgemischen zeichnen sich die erfindungsgemäß eingesetzten Härterkomponenten B) bei gleicher oder sogar besserer Wasserdispergierbarkeit und vergleichbaren oder sogar höheren Isocyanatgehalten insbesondere durch höhere Isocyanatfunktionalitäten aus.

Gegebenenfalls können den Polyisocyanatgemischen B) vor der Emulgierung noch weitere nichthydrophilierte Polyisocyanate, insbesondere Lackpolyisocyanate der obengenannten Art, zugesetzt werden, wobei die Mengenverhältnisse bevorzugt so gewählt werden, daß die resultierenden Polyisocyanatgemische den vorstehend unter a) bis c) genannten Bedingungen entsprechen, weil diese im allgemeinen auch aus Gemischen aus

(1) hydrophil modifizierten Polyisocyanaten und

(2) unmodifizierten Polyisocyanaten der beispielhaft genannten Art bestehen.

In solchen Mischungen übernehmen die hydrophilierten Polyisocyanate die Funktion eines Emulgators für den nachträglich zugemischten Anteil an nichthydrophilen Polyisocyanaten.

Die in den erfindungsgemäßen Beschichtungsmitteln eingesetzte, gegebenenfalls in einem inerten Lösemittel gelöst vorliegende Härterkomponente B) weist bei 23°C im allgemeinen eine Viskosität von 50 - 10000, vorzugsweise 50 - 2000 mPas (D = 40) auf. Die Menge an Lösemittel in der Härterkomponente wird dabei maximal so bemessen, daß in den letztendlich erhaltenen erfindungsgemäßen wäßrigen Beschichtungsmitteln bezogen auf den Festkörpergehalt maximal 20 Gew.-%, bevorzugt maximal 10 Gew.-%, an organischen Lösemitteln vorliegt, wobei auch das gegebenenfalls in den Harzdispersionen A) bereits enthaltene Lösemittel mit in die Berechnung eingeht. Geeignete Lösemittel sind beispielsweise die üblichen Lacklösemittel, wie sie bereits oben bei der Herstellung der Härterkomponente B) beispielhaft beschrieben sind.

Zur Herstellung der wäßrigen Beschichtungsmittel wird die Härterkomponente B) in der wäßrigen Harzkomponente A) emulgiert. Dabei werden Harzdispersion A) und Härterkomponente B) in solchen Mengen mit einander kombiniert, daß auf jede Hydroxyl- oder Aminogruppe der Komponente A) von 0,1 bis 3, bevorzugt von 0,5 bis 2,0 und besonders bevorzugt von 0,7 bis 1,7 Isocyanatgruppen der Komponente B) entfallen. Bei Verwendung nichtfunktioneller, d.h. gegenüber Isocyanaten keine reaktiven Gruppen tragender Harzdispersionen wird die Härterkomponente im allgemeinen in Mengen von bis zu 30 Gew.-%, bevorzugt bis zu 15 Gew.-%, bezogen auf die Gesamtmenge an Harzdispersion A) und Härterkomponente B) eingesetzt.

Vor der Zugabe der Komponente B) können der Komponente A) oder B), vorzugsweise jedoch A), die üblichen Hilfs- und Zusatzmittel der Lacktechnologie einverleibt werden. Hierzu gehören beispielsweise Entschäumer, Verdikker, Verlaufshilfsmittel, Pigmente, Emulgatoren, Dispergierhilfsmittel und auch Lösemittel. Die gewünschte Verarbeitungsviskosität wird durch Zugabe von Wasser eingestellt.

Im Vergleich zu den Polyisocyanaten des Standes der Technik ist die in den erfindungsgemäßen Beschichtungsmitteln eingesetzte Härterkomponente B) besonders leicht in der wäßrigen Harzdispersion A) emulgierbar. In den meisten Fällen reichen daher einfache Emulgiertechniken, z.B. mit einem mechanischen Rührer, oder oftmals auch eine einfache Mischung der beiden Komponenten per Hand aus, um Beschichtungen mit sehr guten Eigenschaften zu erzielen. Selbstverständlich können aber auch Mischtechniken mit höherer Scherenergie, wie z.B. Strahldispergierung (Farbe & Lack **102/3**, 1996, S. 88 - 100) eingesetzt werden.

Die so erhaltenen erfindungsgemäßen Beschichtungsmittel eignen sich für alle Einsatzgebiete, in denen Beschichtungen mit erhöhtem Eigenschaftsprofil Verwendung finden, wie z.B. zur Beschichtung von mineralischen Baustoffen, Straßenbelägen, Holz und Holzwerkstoffen, metallischen Oberflächen, Kunststoffen, Glas oder Papier, außerdem zur Verklebung diverser Werkstoffe. Sie können insbesondere als Grundierungen, Füller, pigmentierte Decklacke und Klarlacke im Bereich Autoreparatur- oder Großfahrzeuglackierung eingesetzt werden. Besonders geeignet sind die Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Die erfindungsgemäßen Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Streichen, Rollen, Gießen oder Rakeln appliziert werden.

Die Trocknung und Aushärtung der Beschichtungen erfolgt im allgemeinen unter normalen Temperaturbedingungen, d.h. ohne Erhitzung der Beschichtung. Die erfindungsgemäßen Bindemittelkombinationen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden.

Aufgrund der hervorragenden Dispergierbarkeit der als Härterkomponenten B) eingesetzten neuen Polyisocyanatgemische bereits bei niedrigen Ethylenoxidgehalten, in Verbindung mit hohen NCO-Gehalten und -Funktionalitäten, führen die erfindungsgemäßen wäßrigen Zweikomponenten-Beschichtungsmittel zu transparenten, hochglän-

zenden und -vernetzten Beschichtungen, die neben sehr guter Lösemittel- und Chemikalienbeständigkeit aufgrund des vergleichsweise niedrigen Gehaltes an hydrophilen Gruppen insbesondere eine ausgezeichnete Wasserfestigkeit aufweisen.

**Beispiele**

Im folgenden beziehen sich alle Prozentangaben auf das Gewicht. Die angegebenen Viskositäten wurden mit Hilfe eines Kegel-Platte-Viskosimeters nach DIN 53019 bei D = 40 und 23°C bestimmt.

**Herstellung der hydroxyfunktionellen Harzdispersionen A)**

Herstellung von wäßrigen Primärdispersionen

In einem 6 1-Reaktionsgefäß mit Rührer, 2 Tropftrichtern und Thermometer wird Teil I unter $N_2$ vorgelegt und auf 80°C aufgeheizt. Dann werden Teil II und Teil III gleichzeitig beginnend innerhalb von 15 Minuten zugetropft, wobei die Reaktionstemperatur konstant gehalten wird. Anschließend wird 30 Minuten bei 80°C nachgerührt. Dann werden Teil IV und V gleichzeitig beginnend innerhalb von 1,5 Stunden zugetropft, wobei die Reaktionstemperatur von 80°C konstant gehalten wird. Anschließend wird 1 Stunde bei 80°C nachgerührt. Danach wird Teil VI innerhalb von 5 Minuten zudosiert und anschließend noch 1,5 Stunden bei 80°C nachgerührt. Danach wird auf Raumtemperatur abgekühlt und mit Ammoniak auf einen pH-Wert von 7,5 bis 8,0 eingestellt. Die Zusammensetzungen und Kenndaten der Produkte A1 und A2 sind in der nachfolgenden Tabelle 1 aufgeführt. Die Mengenangaben erfolgen in g.

| Zusammensetzung | A1 | A2 |
|---|---|---|
| Teil I | | |
| ®Emulgator 951 (Handelsprodukt der Bayer AG) | 33,6 | 33,6 |
| Wasser | 1624,0 | 1624,0 |
| Teil II | | |
| Methylmethacrylat | 78,6 | 73,6 |
| n-Butylacrylat | 44,8 | 43,4 |
| Hydroxypropylmethacrylat | 35,4 | 42,6 |
| Acrylsäure | 5,0 | 5,0 |
| Teil III | | |
| Ammoniumperoxodisulfat | 0,7 | 0,7 |
| Wasser | 116,0 | 116,0 |
| Teil IV | | |
| Methylmethacrylat | 707,8 | 662,4 |
| Butylacrylat | 403,6 | 385,2 |
| Hydroxypropylmethacrylat | 318,9 | 383,0 |
| Acrylsäure | 45,4 | 45,4 |
| Teil V | | |
| Ammoniumperoxodisulfat | 4,8 | 4,8 |
| Wasser | 464,0 | 464,0 |
| Teil VI | | |
| Ammoniumperoxodisulfat | 1,4 | 1,4 |
| Wasser | 116,0 | 116,0 |
| Gesamtmenge | 4000,0 | 4001,1 |
| Ammoniak, 25 %ig in Wasser | 35,0 | 36,3 |
| **Kenndaten** | | |
| Festgehalt | 43,% | 41,% |

(fortgesetzt)

| Zusammensetzung | A1 | A2 |
|---|---|---|
| **Kenndaten** | | |
| pH-Wert | 7,7 | 7,7 |
| OH-Gehalt (Festharz), berechnet | 2,% | 3,% |

**Herstellung der Härterkomponenten B)**

Härterkomponente B1)

860 g (4,75 val) eines Isocyanuratgruppen-haltigen Polyisocyanates auf Basis von HDI mit einem NCO-Gehalt von 23,2 %, einer mittleren NCO-Funktionalität von 3,2 (nach GPC), einem Gehalt an monomerem HDI von 0,2 % und einer Viskosität von 1200 mPas (23°C) werden bei 100°C unter trockenem Stickstoff und Rühren vorgelegt, innerhalb von 30 min mit 140 g (0,28 val) eines auf Methanol gestarteten, monofunktionellen Polyethylenoxidpolyethers eines mittleren Molekulargewichtes von 500, entsprechend einem NCO/OH-Äquivalentverhältnis von 18,5 : 1, versetzt und anschließend bei dieser Temperatur weitergerührt, bis der NCO-Gehalt der Mischung nach etwa 2 h auf den einer vollständigen Urethanisierung entsprechenden Wert von 18,8 % gefallen ist. Durch Zugabe von 0,01 g Zink-(II)-2-ethyl-1-hexanoat wird die Allophanatisierungsreaktion gestartet. Dabei steigt die Temperatur des Reaktionsgemisches aufgrund der freiwerdenden Reaktionswärme bis auf 109°C an. Nach Abklingen der Exothermie, etwa 20 min nach Katalysatorzugabe, wird die Reaktion durch Zugabe von 0,01 g Benzoylchlorid abgebrochen und das Reaktionsgemisch auf Raumtemperatur abgekühlt. Es liegt ein farbloses klares Polyisocyanatgemisch mit folgenden Kenndaten vor:

| | |
|---|---|
| Festgehalt | 100 % |
| NCO-Gehalt | 17,6 % |
| NCO-Funktionalität | 3,5 |
| Viskosität (23°C) | 1400 mPas |
| Ethylenoxidgehalt | 13,1 % |
| Allophanatisierungsgrad | 100 % |

Härterkomponente B2)

880 g (4,86 val) des in Beispiel 1 beschriebenen Isocyanuratgruppen-haltigen Polyisocyanates auf Basis von HDI werden bei 100°C unter trockenem Stickstoff und Rühren vorgelegt, innerhalb von 30 min mit 120 g (0,24 val) eines auf Methanol gestarteten, monofunktionellen Polyethylenoxidpolyethers eines mittleren Molekulargewichtes von 500, entsprechend einem NCO/OHNCO/OH-Äquivalentverhältnis von 20,3: 1, versetzt und anschließend bei dieser Temperatur weitergerührt, bis der NCO-Gehalt der Mischung nach etwa 2 h auf den einer vollständigen Urethanisierung entsprechenden Wert von 19,4 % gefallen ist. Durch Zugabe von 0,01 g Zink-(II)-2-ethyl-1-hexanoat wird die Allophanatisierungsreaktion gestartet. Dabei steigt die Temperatur des Reaktionsgemisches aufgrund der freiwerdenden Reaktionswärme bis auf 109°C an. Nach Abklingen der Exothermie, etwa 20 min nach Katalysatorzugabe, wird die Reaktion durch Zugabe von 0,01 g Benzoylchlorid abgebrochen und das Reaktionsgemisch auf Raumtemperatur abgekühlt. Es liegt ein farbloses klares Polyisocyanatgemisch mit folgenden Kenndaten vor:

| | |
|---|---|
| Festgehalt | 100 % |
| NCO-Gehalt | 18,5 % |
| NCO-Funktionalität | 3,4 |
| Viskosität (23°C) | 1300 mPas |
| Ethylenoxidgehalt | 11,2 % |
| Allophanatisierungsgrad | 90 % |

Vergleichs-Polyisocyanat V1 (Vergleich, gemäß US-P 5 200 489)

860 g (4,75 val) des in Beispiel 1 beschriebenen Isocyanuratgruppen-haltigen Polyisocyanates auf Basis von HDI werden bei 100°C unter trockenem Stickstoff und Rühren vorgelegt, innerhalb von 30 min mit 140 g (0,28 val) des in Beispiel 1 beschriebenen Polyetheralkohols versetzt und bei dieser Temperatur weiter gerührt, bis der NCO-Gehalt der Mischung nach etwa 2 h auf den einer vollständigen Urethanisierung entsprechenden Wert von 18,8 % gefallen ist. Nach Abkühlen auf Raumtemperatur liegt ein farbloses, klares Polyisocyanatgemisch mit folgenden Kenndaten vor:

| | |
|---|---|
| Festgehalt | 100 % |
| NCO-Gehalt | 18,8 % |
| NCO-Funktionalität | 3,0 |
| Viskosität (23°C) | 1300 mPas |
| Ethylenoxidgehalt | 13,1 % |
| Allophanatisierungsgrad | 0 % |

**Anwendungsbeispiele**

Bei den nachfolgenden Beispielen handelt es sich um konkrete Anwendungsbeispiele, bei denen das Leistungsvermögen der erfindungsgemäßen Beschichtungsmittel im Vergleich zu Beschichtungssystemen des Standes der Technik aufgezeigt wird. Zunächst wird das Leistungsvermögen der erfindungsgemäßen Beschichtungsmittel in Füllern bei der Autoreparatur- und Großfahrzeuglackierung aufgezeigt.

| Füller 1 (erfindungsgemäß) | |
|---|---|
| **Komponente 1** | **Einwaage in g** |
| | |
| Harzdispersion A1 | 474,4 |
| Foamaster TCX®, Entschäumer, 100%ig, Henkel | 2,2 |
| Surfynol 104®, Benetzungsmittel, Lieferform 100%ig, wurde mit Butylglykol auf 50 % verdünnt, Air Products | 8,3 |
| Korrosionsinhibitor L1 ®, 100%ig, Erbslöh Krefeld | 2,8 |
| Titandioxid, R-KB 4®, Bayer AG | 79,3 |
| Aerosil R 972®, Bayer AG | 9,0 |
| Talkum AT 1 ®, Norwegian Talc Deutschland GmbH | 70,8 |
| Quarzmehl F 500®, Quarzwerke GmbH Köln-Frechen | 28,2 |
| China-Clay B®, Füllstoff, Chemie-Mineralien KG Bremen | 85,0 |
| Blanc fixe M®, Füllstoff, Sachtleben Chemie GmbH Duisburg | 113,4 |
| Wasser, entionisiert | 120,0 |
| | |
| **Komponente 2** | |
| | |
| Härterkomponente B1, 80%ig in Dipropylenglykoldimethylether | 91,1 |
| | |
| **Gesamtmenge** | 1084,5 |

| Füller 2 (erfindungsgemäß) | |
|---|---|
| **Komponente 1** | **Einwaage in g** |
| | |
| Harzdispersion A1 | 474,4 |

(fortgesetzt)

| Füller 2 (erfindungsgemäß) | |
|---|---|
| **Komponente 1** | **Einwaage in g** |
| Foamaster TCX®, Entschäumer, 100%ig, Henkel | 2,2 |
| Surfynol 104®, Benetzungsmittel, Lieferform 100%ig, wurde mit Butylglykol auf 50 % verdünnt, Air Products | 8,2 |
| Korrosionsinhibitor L1®, 100%ig, Erbslöh Krefeld | 2,8 |
| Titandioxid, R-KB 4®, Bayer AG | 78,3 |
| Aerosil R 972®. Bayer AG | 9,0 |
| Talkum AT 1®, Norwegian Talc Deutschland GmbH | 70,0 |
| Quarzmehl F 500®, Quarzwerke GmbH Köln-Frechen | 28,0 |
| China-Clay B®, Füllstoff, Chemie-Mineralien KG Bremen | 84,0 |
| Blanc fixe M®, Füllstoff, Sachtleben Chemie GmbH Duisburg | 112,1 |
| Wasser, entionisiert | 120,0 |
| | |
| **Komponente 2** | |
| | |
| Härterkomponente B2, 80%ig in Dipropylenglykoldimethylether | 87,0 |
| | |
| **Gesamtmenge** | 1076,0 |

| Füller 3 (Vergleichsbeispiel Nr. 1, nicht erfindungsgemäß) | |
|---|---|
| **Komponente 1** | **Einwaage in g** |
| | |
| Harzdispersion A1 | 474,4 |
| Foamaster TCX®, Entschäumer, 100%ig, Henkel | 2,7 |
| Surfynol 104®, Benetzungsmittel, Lieferform 100%ig, wurde mit Butylglykol auf 50 % verdünnt, Air Products | 8,2 |
| Korrosionsinhibitor L1®, 100%ig, Erbslöh Krefeld | 2,8 |
| Titandioxid, R-KB 4®, Bayer AG | 78,0 |
| Aerosil R 972®, Bayer AG | 9,0 |
| Talkum AT L1® , Norwegian Talc Deutschland GmbH | 69,8 |
| Quarzmehl F 500®, Quarzwerke GmbH Köln-Frechen | 28,0 |
| China-Clay B®, Füllstoff, Chemie-Mineralien KG Bremen | 83,8 |
| Blanc fixe M®, Füllstoff, Sachtleben Chemie GmbH Duisburg | 111,7 |
| Wasser, entionisiert | 120,0 |
| | |

(fortgesetzt)

| Füller 3 (Vergleichsbeispiel Nr. 1, nicht erfindungsgemäß) | |
| --- | --- |
| **Komponente 2** | |
| | |
| Vergleichs-Polyisocyanat V 1, 80%ig in Dipropylenglykoldimethylether | 85,6 |
| | |
| **Gesamtmenge** | 1074,0 |

| Füller 4 (erfindungsgemäß) | |
| --- | --- |
| **Komponente 1** | **Einwaage in g** |
| | |
| Harzdispersion A2 | 450,8 |
| Foamaster TCX®, Entschäumer, 100%ig, Henkel | 2,3 |
| Surfynol 104®, Benetzungsmittel, Lieferform 100%ig, wurde mit Butylglykol auf 50 % verdünnt, Air Products | 8,5 |
| Korrosionsinhibitor L1®, 100%ig, Erbslöh Krefeld | 2,8 |
| Titandioxid, R-KB 4®, Bayer AG | 81,1 |
| Aerosil R 972®, Bayer AG | 9,1 |
| Talkum AT 1 ®, Norwegian Talc Deutschland GmbH | 72,5 |
| Quarzmehl F 500®, Quarzwerke GmbH Köln-Frechen | 28,9 |
| China-Clay B®, Füllstoff, Chemie-Mineralien KG Bremen | 86,9 |
| Blanc fixe M®, Füllstoff, Sachtleben Chemie GmbH Duisburg | 116,0 |
| Wasser, entionisiert | 130,0 |
| | |
| **Komponente 2** | |
| | |
| Härterkomponente B1, 80%ig in Dipropylenglykoldimethylether | 106,2 |
| | |
| **Gesamtmenge** | 1095,1 |

| Füller 5 (erfindungsgemäß) | |
| --- | --- |
| **Komponente 1** | **Einwaage in g** |
| | |
| Harzdispersion A2 | 450,8 |
| Foamaster TCX®, Entschäumer, 100 %ig, Henkel | 2,2 |
| Surfynol 104®, Benetzungsmittel, Lieferform 100%ig, wurde mit Butylglykol auf 50 % verdünnt, Air Products | 8,4 |
| Korrosionsinhibitor L1®, 100%ig, Erbslöh Krefeld | 2,8 |

(fortgesetzt)

| Füller 5 (erfindungsgemäß) | |
|---|---|
| **Komponente 1** | **Einwaage in g** |
| Titandioxid, R-KB 4®, Bayer AG | 80,1 |
| Aerosil R 972®, Bayer AG | 9,1 |
| Talkum AT 1®, Norwegian Talc Deutschland GmbH | 71,5 |
| Quarzmehl F 500®, Quarzwerke GmbH Köln-Frechen | 28,6 |
| China-Clay B®, Füllstoff, Chemie-Mineralien KG Bremen | 85,8 |
| Blanc fixe M®, Füllstoff, Sachtleben Chemie GmbH Duisburg | 114,5 |
| Wasser, entionisiert | 130,0 |
| | |
| **Komponente 2** | |
| | |
| Härterkomponente B2, 80%ig in Dipropylenglykoldimethylether | 101,5 |
| | |
| **Gesamtmenge** | 1085,3 |

| Füller 6 (Vergleichsbeispiel Nr. 2, nicht erfindungsgemäß) | |
|---|---|
| **Komponente 1** | **Einwaage in g** |
| | |
| Harzdispersion A2 | 450,8 |
| Foamaster TCX®, Entschäumer, 100%ig, Henkel | 2,6 |
| Surfynol 104®, Benetzungsmittel, Lieferform 100%ig, wurde mit Butylglykol auf 50 % verdünnt, Air Products | 8,4 |
| Korrosionsinhibitor L1®, 100%ig, Erbslöh Krefeld | 2,8 |
| Titandioxid, R-KB 4®, Bayer AG | 79,8 |
| Aerosil R 972®, Bayer AG | 9,1 |
| Talkum AT 1®, Norwegian Talc Deutschland GmbH | 71,3 |
| Quarzmehl F 500®, Quarzwerke GmbH Köln-Frechen | 28,4 |
| China-Clay B®, Füllstoff, Chemie-Mineralien KG Bremen | 85,5 |
| Blanc fixe M®, Füllstoff, Sachtleben Chemie GmbH Duisburg | 114,0 |
| Wasser, entionisiert | 130,0 |
| | |
| **Komponente 2** | |
| | |
| Vergleichs-Polyisocyanat V1, 80%ig in Dipropylenglykoldimethylether | 100,3 |
| | |
| **Gesamtmenge** | 1083,0 |

Herstellung der Füller

Die Harzdispersionen, Additive und Füllstoffe werden mit einem Rührer (ca. 1000 U/min) homogen gemischt, anschließend in einer handelsüblichen Perlmühle 30 Minuten angerieben und mit Wasser auf eine Viskosität von 15 Sekunden (DIN 6-mm Becher, 23°C) eingestellt (Komponente 1). Dann wird die Komponente 2 (das jeweilige Polyisocyanat) unter Rühren (ca. 800 U/min) zugegeben und homogen untergemischt.

Der so hergestellte Füller 1 hat einen Festgehalt von 58,3 Gew.% und einen pH-Wert von 7,8; der Füller 2 hat einen Festgehalt von 58,3 Gew.-% und einen pH-Wert von 7,9, der Füller 3 hat einen Festgehalt von 58,3 Gew.-% und einen pH-Wert von 7,8, der Füller 4 hat einen Festgehalt von 58,9 % und einen pH-Wert von 7,7, der Füller 5 hat einen Festgehalt von 58,6 % und einen pH-Wert von 7,8 und der Füller 6 hat einen Festgehalt von 59,0 % und einen pH-Wert von 7,7.

Zur Prüfung der Viskositätsstabilität über einen Zeitraum von wenigstens 2 Stunden werden die Füller auf eine Auslaufzeit von 36 s (DIN 53 211, 4-mm-Düse, 23°C) eingestellt und stündlich die Auslaufzeit bestimmt.

Die Applikation der 2K-PUR-Füller erfolgt mit einer handelsüblichen Spritzpistole direkt auf entfettete, angeschliffene Stahlbleche (15 x 30 cm) in einer Schichtdicke von ca. 60 μm. Auf ein zweites 40 x 40 cm großes angeschliffenes Aluminiumblech wird ein Schichtdickenkeil appliziert, um die Blasengrenze und die Lösemittelbeständigkeit zu ermitteln. Die Blasengrenze liegt bei den Füllern 3 und 6 bei ca. 100 μm, bei den Füllern 1, 2, 4, und 5 bei ca. 120 μm.

Nach dem Applizieren werden die Bleche zunächst 30 Minuten bei Raumtemperatur, dann 30 Minuten bei 60°C gelagert und anschließend auf Raumtemperatur abgekühlt. Danach ist sowohl die Trockenschleifbarkeit (320iger Schleifpapier) als auch die Naßschleifbarkeit (800er Schleifpapier) bei den Füllern 3 und 6 gut und bei den Füllern 1, 2, 4 und 5 sehr gut.

Die Bleche werden nun halbseitig mit Papier abgeklebt und die nicht abgeklebte Fläche mit einem lösemittelhaltigen, schwarz pigmentierten, handelsüblichen 2K-PUR-Decklack auf Basis eines Polyacrylatpolyols und eines aliphatischen Polyisocyanats (Permacron Autolack Serie 257/MS Härter plus 3030, Spiess-Hecker) beschichtet (Schichtdicke ca. 60 μm). Durch diesen schwarzen Decklack können Blasen und Krater besonders gut sichtbar gemacht werden. Die Trocknung des Decklacks erfolgt wie beim Füller durch 30 minütige Lagerung bei Raumtemperatur und dann 30 Minuten bei 60°C. Nach 2 Stunden Lagerung bei Raumtemperatur wird die Pendeldämpfung nach König (DIN 53 157) bestimmt. Nach weiteren 3 Tagen bei Raumtemperatur wird die Beständigkeit der Füller gegen Wasser und diverse Lösemittel durch Auflegen eines getränkten Wattebauschs geprüft.

Die beschichteten Stahlbleche werden zusätzlich einer speziellen Feuchtebelastung bei 100 % Luftfeuchtigkeit und einer Temperatur von 40°C unterzogen (Kondenswassertest, DIN EN ISO 2409). Dazu wird das Blech auf der Rückseite und an den Kanten zwecks Korrosionsschutz abgeklebt. Zusätzlich wird sowohl ein Teil des nur mit dem Füller beschichteten Blechs als auch ein Teil des mit Füller und Decklack beschichteten Blechs mit einem farblosen Klebeband abgeklebt. Dieser Bereich ist somit gegen die Wassereinwirkung geschützt und dient bei der späteren Beurteilung als Referenz. Die Bleche werden 72 Stunden der feuchten Atmosphäre bei 40°C ausgesetzt und danach beurteilt. Dazu wird das farblose Klebeband entfernt und sowohl der Füller als auch der Decklack der belasteten und unbelasteten Stellen visuell verglichen. Weiterhin wird die Haftfestigkeit von Füller und Decklack geprüft (Gitterschnitt). Die Prüfergebnisse sind in der folgenden Tabelle aufgelistet.

| Füller Nr. | 1 | 2 | 3 (Vgl.) | 4 | 5 | 6 (Vgl.) |
|---|---|---|---|---|---|---|
| Viskosität: Auslaufzeit in s sofort | 32 | 28 | 29 | 35 | 32 | 29 |
| (DIN-4-mm Becher) nach 60 min | 28 | 30 | 40 | 47 | 45 | 68 |
| nach 120 min | 46 | 45 | 95 | 56 | 54 | 118 |
| Pendeldämpfung nach König, s (nach 30 min 60°C + 2 h RT) | 83 | 84 | 77 | 87 | 91 | 85 |
| Beständigkeit nach 30 min 60°C + 3 d RT[1] Belastung: 30 min Wasser | 0 | 0 | 4 | 0 | 0 | 3 |
| 1 min Isopropanol/Wasser 1:1 | 0 | 0 | 1 | 0 | 0 | 1 |
| 1 min Butylglykol | 0 | 0 | 2 | 0 | 0 | 1 |
| 1 min MPA/Xylol 1:1 | 1 | 0 | 3 | 0 | 0 | 2 |
| Kondenswassertest (72 h, 40°C)[2] Haftung: Füller / Füller + Decklack | 1/1 | 1/1 | 3/4 | 0/1 | 0/1 | 2/3 |

[1]: 0 = bester Wert (ohne Befund), 5 = schlechtester Wert (stark angelöst)

[2]: 0 = bester Wert (ohne Befund), 5 = schlechtester Wert (starker Haftverlust bzw. sehr starke Blasenbildung)

(fortgesetzt)

| Füller Nr. | 1 | 2 | 3 (Vgl.) | 4 | 5 | 6 (Vgl.) |
|---|---|---|---|---|---|---|
| Blasenbildung: Füller / Füller + Decklack | 0/1 | 0/1 | 3/4 | 0/0 | 0/0 | 3/3 |

Diskussion der Ergebnisse:

Die erfindungsgemäß formulierten Füller 1, 2, 4 und 5 haben im Vergleich zu den Füllern 3 und 6 eine bessere Viskositätsstabilität und Lösemittelbeständigkeit. Die Härte, Schleifbarkeit und Blasengrenze der Füller 1 bis 6 sind vergleichbar gut. Eindeutige Vorteile für die Füller 1, 2, 4 und 5 ergeben sich zusätzlich bei der dreitägigen Feuchtebelastung bei 40°C. Zwischen der nichtbelasteten, abgeklebten Fläche und der belasteten Fläche sowohl beim Füller als auch beim Decklack sind praktisch keine Unterschiede zu sehen. Im Gegensatz dazu ist die Haftung bei den Füllern 3 und 6 im belasteten Bereich deutlich schlechter als im unbelasteten, abgeklebten Bereich. Darüberhinaus enthält der belastete Bereich der Füller 3 und 6 im Gegensatz zum unbelasteten Bereich (keine Blasen) eine große Anzahl kleiner Blasen.

2K-PUR Klarlacke

Bei den folgenden Klarlack-Beispielen handelt es sich um Versuche, bei denen die Dispergierbarkeit der bei den erfindungsgemäßen Beschichtungsmitteln zum Einsatz kommenden Polyisocyanate B) mit der Dispergierbarkeit von Polyisocyanaten des Standes der Technik verglichen wird, und die Auswirkungen auf die Transparenz der Filme veranschaulicht werden.

Als wasserverdünnbare Harzkomponente dient neben den oben beschriebenen Harzdispersionen A1 und A2 eine wasserverdünnbare Polyacrylatdispersion A3 auf Basis Methylmethacrylat, Hydroxyethylmethacrylat, Butylacrylat, Acrylsäure, Ditert.-butylperoxid als Initiator und Dimethylethanolamin als Neutralisationsmittel. Der Feststoffgehalt liegt bei ca. 45 Gew.-% in einer Mischung aus Wasser/Solventnaphtha 100/2-Butoxyethanol 85/7,5/7,5; der OH-Gehalt beträgt ca. 3,3 Gew.-% (bez. auf Festharz), die Säurezahl beträgt ca. 25 mg KOH/g (bez. auf Festharz) und der pH-Wert liegt bei ca. 8,0.

Als Härterkomponente dienen die oben beschriebenen Polyisocyanate B1 und B2 sowie das Vergleichspolyisocyanat V1. Es wurde ein NCO/OH-Verhältnis von 1,1:1 eingehalten.

| Klarlack 1 (erfindungsgemäß) | |
|---|---|
| | Einwaage in g |
| **Komponente 1** | |
| Harzdispersion A 1 | 50,0 |
| **Komponente 2** | |
| Härterkomponente B1, 80%ig in Dipropylenglykoldimethylether | 10,4 |
| Gesamtmenge | 60,4 |

| Klarlack 2 (erfindungsgemäß) | |
|---|---|
| | Einwaage in g |
| **Komponente 1** | |
| Harzdispersion A2 | 50,0 |
| **Komponente 2** | |
| Härterkomponente B2, 80%ig in Dipropylenglykoldimethylether | 11,4 |
| Gesamtmenge | 61,4 |

| Klarlack 3 (Vergleichsbeispiel Nr. 3, nicht erfindungsgemäß) | |
| --- | --- |
| | **Einwaage in g** |
| **Komponente 1** | |
| Harzdispersion A1 | 50,0 |
| **Komponente 2** | |
| Vergleichs-Polyisocyanat V1, 80 %ig in Dipropylenglykoldimethylether | 9,7 |
| Gesamtmenge | 59,7 |

| Klarlack 4 (Vergleichsbeispiel Nr. 4, nicht erfindungsgemäß) | |
| --- | --- |
| | **Einwaage in g** |
| **Komponente 1** | |
| Harzdispersion A2 | 50,0 |
| **Komponente 2** | |
| Vergleichs-Polyisocyanat V1, 80 %ig in Dipropylenglykoldimethylether | 11,2 |
| Gesamtmenge | 61,2 |

| Klarlack 5 (erfindungsgemäß) | |
| --- | --- |
| | **Einwaage in g** |
| **Komponente 1** | |
| Harzdispersion A3 | 50,0 |
| **Komponente 2** | |
| Polyisocyanat B1, 80%ig in Dipropylenglykoldimethylether | 14,3 |
| **Gesamtmenge** | 64,3 |

Herstellung der Klarlacke

Die Komponente 1 wird mit dem jeweiligen Polyisocyanathärter (Komponente 2) unter langsamem Rühren (400 U/min), das die Durchmischung von Hand simulieren soll, versetzt und 2 min gemischt. Es wird mit Wasser auf eine Verarbeitungsviskosität von ca. 25 Sekunden (DIN 4 mm Becher, 23°C) eingestellt. Die wässrigen 2K-PUR-Klarlacke werden mittels eines Filmziehers auf Glasplatten aufgezogen (Naßfilmstärke 120 μm). Danach werden die Platten sowohl bei Raumtemperatur (RT) gelagert als auch 30 Minuten bei 60°C (forciert) getrocknet. Nach 24 Stunden wird die Pendeldämpfung nach König (DIN 53 157) gemessen, die Beständigkeit gegen Wasser und diverse Lösemittel ermittelt und die Filmtransparenz visuell beurteilt. Die Prüfergebnisse sind in der nachfolgenden Tabelle aufgeführt.

| Prüfung                          Klarlack Nr.: | 1 | 2 | 3 (Vgl.) | 4 (Vgl.) | 5 |
|---|---|---|---|---|---|
| Pendeldämpfung nach König, s     RT | 53 | 60 | 58 | 64 | 49 |
|                                  forciert | 93 | 106 | 109 | 112 | 88 |
| Filmtransparenz | klar | klar | trüb | trüb | klar |
| Wasserbeständigkeit[1)]          RT | 0 | 0 | 5 | 5 | 0 |
| 30 Min. Einwirkung               forciert | 0 | 0 | 3 | 3 | 0 |
| Isopropanol/Wasser[1)]           RT | 0 | 0 | 3 | 2 | 0 |
| 5 Min. Einwirkung                forciert | 0 | 0 | 1 | 1 | 0 |
| MPA/Xylol (1:1)[1)]              RT | 0 | 0 | 2 | 1 | 0 |
| 5 Min. Einwirkung                forciert | 0 | 0 | 0 | 0 | 0 |
| Butylglykol[1)]                 RT | 0 | 0 | 2 | 1 | 0 |
| 5 Min. Einwirkung                forciert | 0 | 0 | 1 | 0 | 0 |

[1)]: 0 = bester Wert (ohne Befund), 5 = schlechtester Wert (Lackfilm völlig abgelöst)

Diskussion der Ergebnisse:

Die erfindungsgemäß hergestellten Klarlacke 1, 2 und 5 sind absolut transparent, die Klarlacke 3 und 4 sind dagegen trüb. Das läßt den Schluß zu, daß sich die bei den erfindungsgemäßen Lacken 1, 2 und 5 verwendeten Polyisocyanate wesentlich besser und homogener in die wäßrige Phase einemulgieren lassen. Dadurch sind mit den erfindungsgemäßen Beschichtungsmitteln Klarlacke mit höherem Glanz und geringerem Glanzschleier herstellbar als das mit Beschichtungsmitteln des Standes der Technik der Fall ist. Das führt auch dazu, daß die Wasser- und Lösemittelbeständigkeit der Klarlacke 1, 2 und 5 wesentlich besser ist als die der Vergleichsklarlacke 3 und 4.

**Patentansprüche**

1.   Beschichtungsmittel aus

A) 30 bis 99 Gew.-% einer wäßrigen, hydroxy- und/oder aminofunktionellen Harzdispersion,

B) 1 bis 70 Gew.-Teilen einer wasserdispergierbaren Härterkomponente und

C) 0 bis 60 Gew.-Teilen weiteren, in der Lacktechnologie bekannten Hilfs- und Zusatzmittel,

**dadurch gekennzeichnet, daß** es sich bei der Komponente B) um ein wasserdispergierbares Polyisocyanatgemisch auf Basis aliphatischer, cycloaliphatischer, araliphatischer und/oder aromatischer Diisocyanate handelt, das

a) eine mittleren Isocyanatfünktionalität von mindestens 2,0,

b) einen Gehalt an Isocyanatgruppen (berechnet als NCO; Molekulargewicht = 42) von 5,0 bis 25,0 Gew.-% und

c) einen Gehalt an innerhalb von Polyetherketten gebundenen Ethylenoxideinheiten (berechnet als $C_2H_4O$; Molekulargewicht = 44) von 2 bis 50 Gew.-% aufweist, wobei die Polyetherketten im statistischen Mittel 5 bis 35 Ethylenoxideinheiten enthalten und zu mindestens 60 mol-% über Allophanatgruppen mit jeweils zwei, jeweils aus mindestens zwei Diisocyanaten aufgebauten Polyisocyanatmolekülen verknüpft sind.

2. Beschichtungsmittel gemäß Anspruch 1, **dadurch gekennzeichnet, daß** es sich bei der Härterkomponente B) um ein wasserdispergierbares Polyisocyanatgemisch auf Basis aliphatischer und/oder cycloaliphatischer Diisocyanate handelt, das

a) eine mittleren Isocyanatfunktionalität von 2,3 bis 9,9,

b) einen Gehalt an Isocyanatgruppen (berechnet als NCO; Molekulargewicht = 42) von 6,0 bis 22,5 Gew.-% und

c) einen Gehalt an innerhalb von Polyetherketten gebundenen Ethylenoxideinheiten (berechnet als $C_2H_4O$; Molekulargewicht = 44) von 5 bis 40 Gew.-% aufweist, wobei die Polyetherketten im statistischen Mittel 7 bis 30 Ethylenoxideinheiten enthalten und zu mindestens 60 mol-% über Allophanatgruppen mit jeweils zwei, jeweils aus mindestens zwei Diisocyanaten aufgebauten Polyisocyanatmolekülen verknüpft sind.

3. Beschichtungsmittel gemäß Anspruch 1, **dadurch gekennzeichnet, daß** die Polyetherketten der Härterkomponente B) zu mehr als 60 mol-% über Allophanatgruppen mit jeweils zwei Isocyanuratgruppen aufweisenden Polyisocyanatmolekülen verknüpft sind.

4. Beschichtungsmittel gemäß Anspruch 1, **dadurch gekennzeichnet, daß** die Polyetherketten der Härterkomponente B) zu mehr als 80 mol-% über Allophanatgruppen mit jeweils zwei Isocyanuratgruppen aufweisenden Polyisocyanatmolekülen mit ausschließlich aliphatisch und/oder cycloaliphatisch gebundenen Isocyanatgruppen verknüpft sind.

5. Beschichtungsmittel gemäß Anspruch 1, **dadurch gekennzeichnet, daß** es sich bei der Komponente A) um eine wäßrige Harzdispersion mit einem Gehalt an Hydroxylgruppen von 0,5 bis 7,0 Gew.-%, bezogen auf Festharz, handelt.

6. Beschichtungsmittel gemäß Anspruch 1, **dadurch gekennzeichnet, daß** es sich bei der Komponente A) um eine wäßrige Harzdispersion auf Polymerisatbasis handelt.

7. Beschichtungsmittel gemäß Anspruch 1, **dadurch gekennzeichnet, daß** es sich bei der Komponente A) um eine wäßrige Harzdispersion auf Polyesterbasis handelt.

8. Beschichtungsmittel gemäß gemäß Anspruch 1, **dadurch gekennzeichnet, daß** es sich bei der Komponente A) um eine wäßrige Harzdispersion auf Polyurethanbasis handelt.

9. Beschichtungsmittel gemäß Anspruch 1, **dadurch gekennzeichnet, daß** es sich bei der Komponente A) um eine wäßrige Harzdispersion auf Polyether- oder Polyepoxidbasis handelt.

10. Beschichtungsmittel gemäß Anspruch 1, **dadurch gekennzeichnet, daß** es sich bei der Komponente A) um eine wäßrige Hybridharzdispersion auf Polyester-/Polyacrylat-, Polyester-/Polyurethan, Polyurethan-/Polyacrylat-, Polyether/Polyacrylat-, Polyether/Polyester- oder Polyether-/Polyurethanbasis handelt.

11. Verfahren zur Herstellung der Beschichtungsmittel gemäß Anspruch 1, **dadurch gekennzeichnet, daß** die Komponente A), die Komponente B) und gegebenenfalls die Komponente C) in solchen Mengen mit einander gemischt werden, daß auf jede Hydroxyl- oder Aminogruppe der Komponente A) von 0,1 bis 3 Isocyanatgruppen der Komponente B) entfallen.

**12.** Verfahren zur Herstellung der Beschichtungsmittel gemäß Anspruch 1, **dadurch gekennzeichnet, daß** die Komponente A), die Komponente B) und gegebenenfalls die Komponente C) in solchen Mengen mit einander gemischt werden, daß auf jede Hydroxyl- oder Aminogruppe der Komponente A) von 0,5 bis 2,0 Isocyanatgruppen der Komponente B) entfallen.

**13.** Verfahren zur Herstellung der Beschichtungsmittel gemäß Anspruch 1, **dadurch gekennzeichnet, daß** die Komponente A), die Komponente B) und gegebenenfalls die Komponente C) in solchen Mengen mit einander gemischt werden, daß auf jede Hydroxyl- oder Aminogruppe der Komponente A) von 0,7 bis 1,7 Isocyanatgruppen der Komponente B) entfallen.

**14.** Verwendung der Beschichtungsmittel gemäß Anspruch 1 zur Herstellung von Lacken und Beschichtungen auf mineralischen Baustoffen, Straßenbelägen, Holz und Holzwerkstoffen, metallischen Oberflächen, Kunststoffen, Glas oder Papier.

**15.** Verwendung der Beschichtungsmittel gemäß Anspruch 1 zur Herstellung von Grundierungen, Grundierungsfüllern, Füllern, Decklacken, Klarlacken oder Dichtmassen.

**16.** Verwendung der Beschichtungsmittel gemäß Anspruch 1 zur Herstellung von Grundierungen, Grundierungsfüllern, Füllern, Decklacken und Klarlacken in der Autoreparatur- und Großfahrzeuglackierung.

**Claims**

**1.** Coating compositions comprising

A) from 30 to 99% by weight of an aqueous, hydroxy- and/or aminofunctional resin dispersion,

B) from 1 to 70 parts by weight of a water-dispersible curing component and

C) from 0 to 60 parts by weight of further auxiliaries and additives, known in paint technology,

**characterized in that** component B) is a water-dispersible polyisocyanate mixture based on aliphatic, cycloaliphatic, araliphatic and/or aromatic diisocyanates and

a) having an average isocyanate functionality of at least 2.0,

b) having an isocyanate group content (calculated as NCO; molecular weight = 42) of from 5.0 to 25.0% by weight, and

c) containing from 2 to 50% by weight of ethylene oxide units (calculated as $C_2H_4O$; molecular weight = 44) attached within polyether chains, the polyether chains containing on average from 5 to 35 ethylene oxide units and being linked to the extent of at least 60 mol% via allophanate groups with in each case two polyisocyanate molecules each synthesized from at least two diisocyanates.

**2.** Coating compositions according to Claim 1, **characterized in that** the curing component B) is a water-dispersible polyisocyanate mixture based on aliphatic and/or cycloaliphatic diisocyanates and

a) having an average isocyanate functionality of from 2.3 to 9.9,

b) having an isocyanate group content (calculated as NCO; molecular weight = 42) of from 6.0 to 22.5% by weight, and

c) containing from 5 to 40% by weight of ethylene oxide units (calculated as $C_2H_4O$; molecular weight = 44) attached within polyether chains, the polyether chains containing on average from 7 to 30 ethylene oxide units and being linked to the extent of at least 60 mol% via allophanate groups with in each case two polyisocyanate molecules each synthesized from at least two diisocyanates.

**3.** Coating compositions according to Claim 1, **characterized in that** the polyether chains of the curing component B) are linked to the extent of more than 60 mol% via allophanate groups with polyisocyanate molecules each containing 2 isocyanurate groups.

4. Coating compositions according to Claim 1, **characterized in that** the polyether chains of curing component B) are linked to the extent of more than 80% via allophanate groups with polyisocyanate molecules each containing two isocyanurate groups and containing exclusively aliphatically and/or cycloaliphatically attached isocyanate groups.

5. Coating compositions according to Claim 1, **characterized in that** component A) is an aqueous resin dispersion having a hydroxyl group content of from 0.5 to 7.0% by weight, based on resin solids.

6. Coating compositions according to Claim 1, **characterized in that** component A) is an addition-polymer-based aqueous resin dispersion.

7. Coating compositions according to Claim 1, **characterized in that** component A) is a polyester-based aqueous resin dispersion.

8. Coating compositions according to Claim 1, **characterized in that** component A) is a polyurethane-based aqueous resin dispersion.

9. Coating compositions according to Claim 1, **characterized in that** component A) is a polyether- or polyepoxide-based aqueous resin dispersion.

10. Coating compositions according to Claim 1, **characterized in that** component A) is a polyester/polyacrylate-, polyester/polyurethane-, polyurethane/polyacrylate-, polyether/polyacrylate-, polyether/polyester or polyether/polyurethane-based aqueous hybrid resin dispersion.

11. Process for preparing the coating compositions according to Claim 1, **characterized in that** component A), component B) and, where appropriate, component C) are mixed with one another in amounts such that there are from 0.1 to 3 isocyanate groups of component B) per hydroxyl or amino group of component A).

12. Process for preparing the coating compositions according to Claim 1, **characterized in that** component A), component B) and, where appropriate, component C) are mixed with one another in amounts such that there are from 0.5 to 2.0 isocyanate groups of component B) per hydroxyl or amino group of component A).

13. Process for preparing the coating compositions according to Claim 1, **characterized in that** component A), component B) and, where appropriate, component C) are mixed with one another in amounts such that there are from 0.7 to 1.7 isocyanate groups of component B) per hydroxyl or amino group of component A).

14. Use of the coating compositions according to Claim 1 for producing paints and coatings on mineral building materials, road surfacings, wood and wood-based materials, metallic surfaces, plastics, glass or paper.

15. Use of the coating compositions according to Claim 1 for preparing primers, primer-surfacers, surfacers, topcoat materials, clearcoat materials or sealants.

16. Use of the coating compositions according to Claim 1 for preparing primers, primer-surfacers, surfacers, topcoat materials and clearcoat materials in automotive refinish and the finishing of large vehicles.

**Revendications**

1. Agent de revêtement à partir de

   A) 30 à 99 % en poids d'une dispersion aqueuse de résine à fonctionnalité hydroxy et/ou amino,
   B) 1 à 70 parties en poids d'un composant durcisseur susceptible d'être dispersé dans l'eau et
   C) O à 60 parties en poids d'autres agents auxiliaires et d'addition connus dans la technique des laques,

   **caractérisé en ce que** le composant B) est un mélange de polyisocyanates susceptibles d'être dispersés dans l'eau à base de diisocyanates aliphatiques, cycloaliphatiques, araliphatiques et/ou aromatiques, qui présente

a) une fonctionnalité isocyanate moyenne d'au moins 2,0,
b) une quantité de 5,0 à 25,0 % en poids de groupes isocyanates (calculé comme NCO ; masse moléculaire = 42) et
c) une quantité de 2 à 50 % en poids d'unités oxyde d'éthylène liées à l'intérieur des chaînes polyéthers (calculé comme $C_2H_4O$ ; masse moléculaire = 44), les chaînes polyéthers contenant statistiquement en moyenne 5 à 35 unités oxyde d'éthylène et au moins 60 % en moles liées via des groupes allophanates avec chacun deux molécules polyisocyanates qui sont chacune préparées à partir d'au moins deux groupes isocyanates.

2. Agent de revêtement selon la revendication 1, **caractérisé en ce que** le composant durcisseur B) est un mélange de polyisocyanates susceptibles d'être dispersés dans l'eau à base de diisocyanates aliphatiques et/ou cycloaliphatiques, qui présente

a) une fonctionnalité isocyanate moyenne de 2,3 à 9,9,
b) une quantité de 6,0 à 22,5 % en poids de groupes isocyanates (calculé comme NCO ; masse moléculaire = 42) et
c) une quantité de 5 à 40 % en poids d'unités oxyde d'éthylène liées à l'intérieur des chaînes polyéthers (calculé comme $C_2H_4O$ ; masse moléculaire = 44), les chaînes polyéthers contiennent statistiquement en moyenne 7 à 30 unités oxyde d'éthylène et au moins 60 % en moles sont liées via des groupes allophanates avec chacun deux molécules polyisocyanates qui sont chacune préparées à partir d'au moins deux groupes isocyanates.

3. Agent de revêtement selon la revendication 1, **caractérisé en ce que** plus de 60 % en moles des chaînes polyéthers du composant durcisseur B) sont liées via des groupes allophanates avec chacun deux molécules polyisocyanates présentant chacune deux groupes isocyanurates.

4. Agent de revêtement selon la revendication 1, **caractérisé en ce que** plus de 80 % en moles des chaînes polyéthers du composant durcisseur B) sont liées via des groupes allophanates avec chacun deux molécules polyisocyanates présentant chacune deux groupes isocyanurates avec en outre des groupes isocyanates liés aliphatiquement et/ou cycliquement.

5. Agent de revêtement selon la revendication 1, **caractérisé en ce que** le composant A) est une dispersion de résine aqueuse avec une quantité de groupes hydroxyle de 0,5 à 7,0 % en poids, rapporté à la résine solide.

6. Agent de revêtement selon la revendication 1, **caractérisé en ce que** le composant A) est une dispersion de résine aqueuse à base de polymérisat.

7. Agent de revêtement selon la revendication 1, **caractérisé en ce que** le composant A) est une dispersion de résine aqueuse à base de polyester.

8. Agent de revêtement selon la revendication 1, **caractérisé en ce que** le composant A) est une dispersion de résine aqueuse à base de polyuréthane.

9. Agent de revêtement selon la revendication 1, **caractérisé en ce que** le composant A) est une dispersion aqueuse à base de polyéther ou de polyépoxyde.

10. Agent de revêtement selon la revendication 1, **caractérisé en ce que** le composant A) est une dispersion de résine hybride aqueuse à base de polyester/polyacrylate, polyester/polyuréthane, polyuréthane/polyacrylate, polyéther/polyacrylate, polyéther/polyester ou polyéther/polyuréthane.

11. Procédé de préparation de l'agent de revêtement selon la revendication 1, **caractérisé en ce qu'**on mélange les uns avec les autres le composant A), le composant B) et éventuellement le composant C) en quantités telles que chaque groupe hydroxyle ou amino du composant A) correspond à 0,1 à 3 groupes isocyanates du composant B).

12. Procédé de préparation de l'agent de revêtement selon la revendication 1, **caractérisé en ce qu'**on mélange les uns avec les autres le composant A), le composant B) et éventuellement le composant C) en quantités telles que chaque groupe hydroxyle ou amino du composant A) correspond à 0,5 à 2,0 groupes isocyanates du composant B).

**13.** Procédé de préparation de l'agent de revêtement selon la revendication 1, **caractérisé en ce qu'**on mélange les uns avec les autres le composant A), le composant B) et éventuellement le composant C) en quantités telles que chaque groupe hydroxyle ou amino du composant A) correspond à 0,7 à 1,7 groupes isocyanates du composant B).

**14.** Utilisation de l'agent de revêtement selon la revendication 1 pour la préparation de laques et de revêtements pour des matériaux de construction minéraux, des revêtements de routes, des matériaux de bois et des matériaux dérivés du bois, des surfaces métalliques, des plastiques, du verre ou du papier.

**15.** Utilisation de l'agent de revêtement selon la revendication 1 pour la préparation d'apprêts, de charges pour apprêts, de charges, de laques de revêtement, de laques transparentes ou d'agents d'étanchéité.

**16.** Utilisation de l'agent de revêtement selon la revendication 1 pour la préparation d'apprêts, de charges pour apprêts, de charges, de laques de revêtement et de laques transparentes pour réparations d'automobiles et de laques pour gros véhicules.